# NEUE EUROPÄISCHE PATENTSCHRIFT

(11) **EP 2 882 316 B2**
(45) Veröffentlichungstag und Bekanntmachung des Hinweises auf die Entscheidung über den Einspruch: **08.09.2021**
(45) Hinweis auf die Patenterteilung: 11.07.2018
(21) Anmeldenummer: 13747994.5
(22) Anmeldetag: 31.07.2013
(51) Int. Cl.: A47B 96/02

(54) **ANORDNUNG ZUR BEFESTIGUNG EINER ABLAGEVORRICHTUNG SOWIE ABLAGEVORRICHTUNG**
ARRANGEMENT FOR FASTENING A SHELF AND SHELF
AGENCEMENT POUR LA FIXATION D'UN DISPOSITIF DE RANGEMENT ET DISPOSITIF DE RANGEMENT

(30) Priorität: 08.08.2012 DE 102012015574
(43) Veröffentlichungstag der Anmeldung: 17.06.2015
(73) Patentinhaber: Knoll Sen., Alexander, 74405 Gaildorf (DE)
(72) Erfinder: KNOLL Jun., Alexander, 74405 Gaildorf (DE)
(74) Vertreter: Daub, Thomas
(86) Internationale Anmeldenummer: PCT/EP2013/066050
(87) Internationale Veröffentlichungsnummer: WO 2014/023621

(56) Entgegenhaltungen:
- WO-A1-2011/088166
- DE-U1- 20 212 950
- FR-A- 1 560 077
- US-A- 1 337 852
- US-A- 2 202 568
- US-A- 3 192 667
- US-A- 5 121 582
- US-A- 5 647 566
- US-A- 6 079 336
- US-A1- 2005 235 410
- US-A1- 2006 037 133

## Beschreibung

### Stand der Technik

Die Erfindung betrifft eine Anordnung zur Befestigung einer Ablagevorrichtung nach dem Oberbegriff des unabhängigen Patentanspruchs 1 und eine Ablagevorrichtung nach dem Oberbegriff des unabhängigen Patentanspruchs 10.

Aus dem Stand der Technik sind unterschiedliche Ausführungen einer Anordnung zur Befestigung einer Ablagevorrichtung bekannt. Die Ablagevorrichtungen werden üblicherweise in einem Bad oder einer Dusche an einer gefliesten Raumwand bzw. direkt an einem Wandbelag befestigt und dienen zum Bereitstellen von Ablagemöglichkeiten für Badutensilien und/oder Duschutensilien, wie beispielsweise Gerätschaften, Seifen, Flaschen, Becher, Textilien und dergleichen. Da normalerweise eine Befestigung der Ablagevorrichtung auf dem Wandbelag erfolgt, können der Wandbelag und die auf der Raumwand angebrachte Grundierung beschädigt werden. Sowohl bei einer fachmännischen als auch bei einer nichtfachmännischen bzw. unsachgemäßen Montage der Ablagevorrichtung besteht bei einer nachträglichen Montage der Ablagevorrichtung das Risiko einer Beschädigung des Wandbelags. Häufig erfolgt die Montage der Ablagevorrichtung jedoch nicht durch einen Fachmann, wodurch beispielsweise eine Verwendung von nicht rostfreien Schrauben oder eine mangelhafte Befestigung zu einer optischen Beeinträchtigung des Wandbelags bzw. zu einer Verletzungsgefahr einer in der Dusche oder in dem Bad befindlichen Person führen kann. Häufig weist eine nachträglich angebrachte Ablagevorrichtung keine dauerhafte oder sichere Befestigung an dem Wandbelag auf oder verliert ihre Formstabilität bzw. verformt sich und kann dadurch innerhalb kurzer Zeit unbrauchbar werden.

Aus einem Werbeprospekt der Firma Dansani ist eine Anordnung zur Befestigung einer Ablagevorrichtung für Bad- und/oder Duschutensilien an einer mit einem Wandbelag versehenen Raumwand bekannt. Die Ablagevorrichtung weist ein sich im Wesentlichen in einer horizontalen Ebene erstreckendes Grundelement und zumindest einen abgewinkelten Randsteg auf. Zur Befestigung der Ablagevorrichtung an einer gefliesten Raumwand bzw. direkt an einem Wandbelag in einem Bad oder in einer Dusche wird die Ablagevorrichtung entweder in einer Fuge zwischen dem Wandbelag angeordnet und verfugt oder nachträglich an den Wandbelag montiert, indem entweder in den Wandbelag oder in die Fuge zwischen dem Wandbelag ein Schlitz eingefräst und anschließend verfugt wird.

Ferner ist aus US 3,192,667 bereits eine Anordnung zur Befestigung einer Ablagevorrichtung für Bad und/oder Duschuntensilien an einer mit einem Wandbelag versehenen Raumwand bekannt. Die bekannte Anordnung umfasst die Ablagevorrichtung, die ein sich im Wesentlichen in einer horizontalen Ebene erstreckendes Grundelement und zumindest einen abgewinkelten Randsteg aufweist.

Der Erfindung liegt insbesondere die Aufgabe zugrunde, eine Anordnung zur Befestigung einer Ablagevorrichtung bereitzustellen, welche eine sichere und optisch ansprechende Montage der Ablagevorrichtung ermöglicht.

Die Aufgabe wird erfindungsgemäß durch die Merkmale des Patentanspruchs 1 und/oder des Patentanspruchs 10 gelöst, wobei weitere Ausgestaltungen der Erfindung den Ansprüchen 2 bis 9 entnommen werden können.

Die Erfindung geht aus von einer Anordnung zur Befestigung einer Ablagevorrichtung für Bad- und/oder Duschutensilien an einer mit einem Wandbelag versehenen Raumwand, wobei die Ablagevorrichtung ein sich im Wesentlichen in einer horizontalen Ebene erstreckendes Grundelement und zumindest einen abgewinkelten Randsteg aufweist. Es wird vorgeschlagen, dass die Ablagevorrichtung zumindest einen sich in einer vertikalen Ebene erstreckenden Flansch aufweist, der unter dem Wandbelag der Raumwand angeordnet ist. In diesem Zusammenhang soll unter "einer horizontalen Ebene" insbesondere eine im Wesentlichen orthogonal zur Haupterstreckungsrichtung der Raumwand angeordnete Ausrichtung des sich erstreckenden Grundelements verstanden werden, welche vorzugsweise maximal um 2° von einer rechtwinkligen Ausrichtung abweichen kann.

Ein wesentlicher Vorteil der Erfindung besteht darin, dass die Ablagevorrichtung zumindest einen sich in einer vertikalen Ebene erstreckenden Flansch aufweist, der unter dem Wandbelag der Raumwand angeordnet ist. Ein weiterer wesentlicher Vorteil der erfindungsgemäßen Anordnung ist die beidseitige sowie großflächige Befestigung des Flansches der Ablagevorrichtung an einer Raumwand, wobei in diesem Zusammenhang unter "beidseitig" insbesondere eine wandbelagseitige und eine raumwandseitige Fläche des Flansches verstanden werden soll. Einerseits kann die raumwandseitige Fläche des Flansches an der Raumwand befestigt und andererseits kann die wandbelagseitige Fläche des Flansches von dem Wandbelag überdeckt und ebenfalls an die Raumwand gedrückt werden. In vorteilhafter Weise kann hierdurch eine einfache Montage der Ablagevorrichtung vor dem Aufbringen des Wandbelags an der Raumwand erfolgen, wodurch der Flansch der Ablagevorrichtung von dem Wandbelag überdeckt werden kann und somit nach dem Aufbringen des Wandbelags an der Raumwand nicht sichtbar ist. Hierdurch kann eine besonders schnelle Montage und eine mühelose Einfliesung der Ablagevorrichtung während des Aufbringens des Wandbelags erfolgen. Im Vergleich zur herkömmlichen Anordnung der Ablagevorrichtung, bei welcher die Ablagevorrichtung an einer gefliesten Raumwand bzw. direkt an einem Wandbelag befestigt wird, kann bei der erfindungsgemäßen Anordnung das Risiko einer Beschädigung des Wandbelags ausgeschlossen werden. Ferner ist auf Grund des einstückig aus der Raumwand ragenden Bauteils eine stabile bzw. sichere Anordnung der Ablagevorrichtung an der Raumwand möglich und somit eine optisch besonders vorteilhafte Ablagevorrichtung in einer Dusche oder in einem Bad anbringbar.

In einer Ausgestaltung der Erfindung erstreckt sich der zumindest eine Flansch oberhalb und/oder unterhalb des Grundelements. In vorteilhafter Weise kann mit zunehmender Flächengröße des Flansches eine zunehmende Anlagefläche des Flansches mit der Raumwand entstehen, wodurch eine sichere Mehrfachbefestigung der Ablagevorrichtung oberhalb und/oder unterhalb des Grundelements möglich ist und somit eine Erhöhung der Standfestigkeit und der Belastbarkeit der befestigten Ablagevorrichtung erfolgen kann. In vorteilhafter Weise kann der oberhalb und/oder unterhalb des Grundelements angeordnete Flansch der Ablagevorrichtung einfach und preisgünstig aus einer Platine herstellt und auf Grund der großen Anlagefläche ohne Montagefehler schnell und sicher an einer Raumwand montiert werden.

In einer weiteren Ausgestaltung der Erfindung weist das Grundelement eine Ablaufeinrichtung auf. Hierdurch können sowohl eine unerwünschte permanente Benetzung von Wasser und/oder Waschlotion als auch dadurch verursachte Ablagerungen vermieden werden, wodurch die Ablagevorrichtung hohen hygienischen Anforderungen gerecht werden kann und die Badutensilien und/oder Duschutensilien stets rutschsicher auf der Ablagevorrichtung abgestellt werden können.

Es wird vorgeschlagen, dass sich der zumindest eine Randsteg oberhalb und/oder unterhalb des Grundelements erstreckt. In vorteilhafter Weise kann hierdurch ein Abrutschen von auf dem Grundelement abgestellten Badutensilien und/oder Duschutensilien verhindert und eine Verletzungsgefahr an der Ablagevorrichtung einer in einem Bad oder einer Dusche befindlichen Personen minimiert werden.

Erfindungsgemäß bilden das Grundelement, der zumindest eine Flansch und der zumindest eine Randsteg der Ablagevorrichtung eine wannenförmige Aufnahme zum Aufnehmen eines Wandbelags aus. In vorteilhafter Weise kann hierdurch eine elegante Ablagevorrichtung mit einer besonders hohen optischen Anpassungsfähigkeit entstehen, da die Ablagevorrichtung an alle Fliesendesigns, Dekorelemente bzw. Steindekore des Wandbelags optisch angepasst werden kann. Weiterhin kann die Ablagevorrichtung ebenfalls als ein auffälliges Kontrastelement zum Wandbelag mit einem von dem Wandbelag abweichenden Dekorelement ausgestattet oder beispielsweise um 180° gedreht werden sowie als eine Ablagevorrichtung in einem neutralen eleganten Design ohne ein Wandbelag an der Raumwand montiert werden. Die wannenförmige Ausgestaltung der Ablagevorrichtung kann eine besonders formstabile Ausführung der Ablagevorrichtung ermöglichen, welche als kostengünstiges Massenteil hergestellt und individuell optisch mit dem Wandbelag veredelt werden kann. Ist eine Änderung des Wandbelags in einem Bad oder in einer Dusehe geplant, kann der Wandbelag nachträglich in der Ablagevorrichtung ausgetauscht und somit an den neuen Wandbelag angepasst werden.

In einer Ausgestaltung wird vorgeschlagen, dass der zumindest eine Flansch Ausnehmungen zur Befestigung an der Raumwand aufweist. Hierdurch können in vorteilhafter Weise die Ausnehmungen auch innerhalb des Flansches eine Verbindung des Wandbelags mit der Raumwand ermöglichen, wodurch die Ablagevorrichtung ausgerichtet in ihrer Position an der Raumwand bzw. an dem Wandbelag mehrfach fixiert werden kann.

In einer weiteren Ausgestaltung wird vorgeschlagen, dass die Ausnehmungen des Flansches zur Aufnahme von Bindemittel und/oder Befestigungselementen vorgesehen sind. In vorteilhafter Weise kann die Ablagevorrichtung über zumindest zwei verschiedene Befestigungsarten mehrfach an der Raumwand befestigt werden, wodurch eine besonders stabile und belastbare Ablagevorrichtung zur Verfügung gestellt werden kann.

Weiter wird vorgeschlagen, dass das Grundelement eine mehreckige oder eine runde Grundform aufweist. In vorteilhafter Weise kann die Ablagevorrichtung in mannigfaltigen Ausführungsformen bzw. unterschiedlichen Ausführungsgrößen hergestellt und dadurch an die Architektur, an die Raumbedingungen in einem Bad oder einer Dusche und an die Bedürfnisse einer Person angepasst werden. Grundsätzlich können alle Ausführungsformen bzw. Ausführungsgrößen der Ablagevorrichtung besonders vorteilhaft platzsparend in einem Eckbereich befestigt werden, wobei runde und viereckige Ablagevorrichtungen eine große Ablagefläche aufweisen und an nur einer Wand ideal befestigt werden können.

Eine bevorzugte Realisierung der erfindungsgemäßen Anordnung sieht ein Grundelement vor, das aus einem nichtrostenden Metall oder aus einem Kunststoff oder aus einem Verbundwerkstoff ausgebildet ist. In vorteilhafter Weise können dadurch besonders langlebige Ablagevorrichtungen mit besonders hochwertigen wasserverträglichen Werkstoffen bereitgestellt werden, welche nahezu für alle Fliesendesigns, Dekorelemente bzw. Steindekore des Wandbelags geeignet sind.

Erfindungsgemäß umfasst die Ablagevorrichtung einen Wandbelag, der in der wannenförmigen Aufnahme aufgenommen ist, wobei der Wandbelag in die wannenförmige Aufnahme eingeklebt ist. In vorteilhafter Weise kann hierdurch die Ablagevorrichtung durch Einfügen eines zugeschnittenen Wandbelags optisch an die Umgebung angepasst werden.

In einer Ausgestaltung wird vorgeschlagen, dass zwischen dem Wandbelag der Ablagevorrichtung und dem Wandbelag einer Raumwand eine mit dem Werkstoff der Ablagevorrichtung verträgliche Silikondichtmasse aufgebracht wird. Hierdurch können die Hohlräume und die Übergänge zwischen dem Wandbelag der Ablagevorrichtung und dem Wandbelag an der Raumwand abgedichtet bzw. optisch überdeckt werden, wodurch das Ablaufen des Wassers zusätzlich begünstigt werden kann. In vorteilhafter Weise kann die Silikondichtmasse die Ablagevorrichtung zusätzlich fixieren.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Von gleichen Bauteilen in einer Figur ist nur jeweils ein Bauteil gekennzeichnet.

Es zeigen:
- Fig. 1: in einer schematischen Darstellung ein erstes Ausführungsbeispiel einer Ablagevorrichtung mit einem dreieckigen Grundelement, mit zwei an den Kanten des Grundelements angeordneten gleich langen Flanschen und mit einem an einer weiteren Kante des Grundelements angeordneten Randsteg,
- Fig. 2: in einer schematischen Darstellung ein zweites Ausführungsbeispiel der Ablagevorrichtung mit einem dreieckigen Grundelement, mit zwei an den Kanten des Grundelements angeordneten ungleich langen Flanschen und mit einem an einer weiteren Kante des Grundelements angeordneten Randsteg,
- Fig. 3: in einer schematischen Darstellung ein drittes Ausführungsbeispiel der Ablagevorrichtung mit einem rechteckigen Grundelement, mit einem an einer langen Kante des Grundelements angeordneten Flansch und mit drei an weiteren drei Kanten des Grundelements angeordneten Randstegen,
- Fig. 4a: in einer Seitenansicht ein viertes Ausführungsbeispiel der Ablagevorrichtung mit einem rechteckigen Grundelement, mit einem an der langen Kante des Grundelements oberhalb des Grundelements angeordneten ersten Flansch und mit einem unterhalb des Grundelements gegenüberliegend des ersten Flansches angeordneten zweiten Flansch und mit drei an weiteren drei Kanten des Grundelements angeordneten Randstegen,
- Fig. 4b: in einer weiteren Seitenansicht das vierte Ausführungsbeispiel der Ablagevorrichtung aus Fig. 4a,
- Fig. 5: in einer schematischen Darstellung ein fünftes Ausführungsbeispiel einer Ablagevorrichtung mit einem rechteckigen Grundelement, mit zwei an den Kanten des Grundelements angeordneten ungleich langen Flanschen und mit zwei an weiteren zwei Kanten des Grundelements angeordneten Randstegen,
- Fig. 6: in einer schematischen Darstellung die Ablagevorrichtung aus Fig. 1 mit einem Wandbelag,
- Fig. 7: in einer schematischen Darstellung die Ablagevorrichtung aus Fig. 5 mit einem Wandbelag und
- Fig. 8: in einer schematischen Darstellung eine erfindungsgemäße Anordnung zur Befestigung einer Ablagevorrichtung mit der Ablagevorrichtung aus Fig. 6.

### Beschreibung der Ausführungsbeispiele

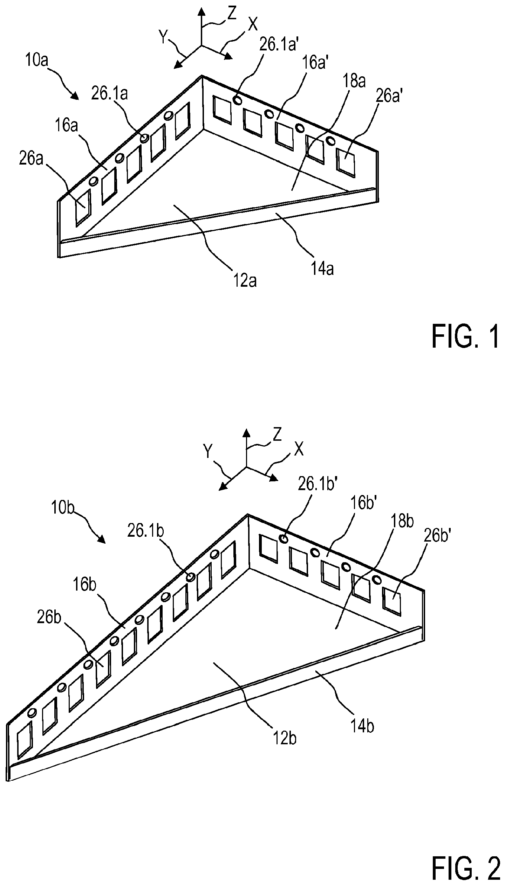

Die Fig. 9 zeigt eine erfindungsgemäße Anordnung zur Befestigung einer Ablagevorrichtung 10a; 10b; 10c; 10d; 10e für Bad- und/oder Duschutensilien an einer mit einem Wandbelag 20 versehenen Raumwand 22. Die Ablagevorrichtung 10a; 10b; 10c; 10d; 10e weist ein sich im Wesentlichen in einer horizontalen Ebene XY erstreckendes Grundelement 12a; 12b; 12c; 12d; 12e und zumindest einen abgewinkelten Randsteg 14a; 14b; 14c; 14c'; 14c"; 14d; 14d'; 14d"; 14e; 14e' auf. Die Ablagevorrichtung 10a; 10b; 10c; 10d; 10e kann in verschiedenen Formen und Größen ausgeführt werden und wird an einer Raumwand 22 eines Bades oder einer Dusche montiert. Hierbei ist sowohl eine Montage in einem Eckbereich als auch in einem flachen Bereich der Raumwand 22 möglich. In den Fig. 1 bis 5 sind fünf Ausführungsbeispiele der Ablagevorrichtung 10a; 10b; 10c; 10d; 10e dargestellt, wobei die Erfindung nicht auf die beschriebenen Ausführungsbeispiele beschränkt ist, sondern auch alle im Sinne der Erfindung gleichwirkenden Ausführungen der Ablagevorrichtung 10a; 10b; 10c; 10d; 10e umfassen kann. Vorzugsweise ist das Grundelement 12a; 12b; 12c; 12d; 12e aus einem nichtrostenden Metall, einem Kunststoff oder einem Verbundwerkstoff ausgebildet. Auf Kundenwunsch ist jedoch auch eine Ausführung aus anderen Werkstoffen möglich oder eine Ausführung aus einer Kombination der zuvor genannten Werkstoffe. Ebenso ist denkbar, die Ablagevorrichtung 10a; 10b; 10c; 10d; 10e zu individualisieren, indem diese mit einem Logo des Kunden versehen wird.

Um eine Anordnung zur Befestigung einer Ablagevorrichtung 10a; 10b; 10c; 10d; 10e bereitzustellen, welche eine sichere und optisch ansprechende Montage der Ablagevorrichtung 10a; 10b; 10c; 10d; 10e ermöglicht, wird erfindungsgemäß vorgeschlagen, dass die Ablagevorrichtung 10a; 10b; 10c; 10d; 10e zumindest einen sich in einer vertikalen Ebene XZ, YZ erstreckenden Flansch 16a; 16a'; 16b; 16b'; 16c; 16d; 16d'; 16e; 16e' aufweist, der unter dem Wandbelag 20 der Raumwand 22 angeordnet ist.

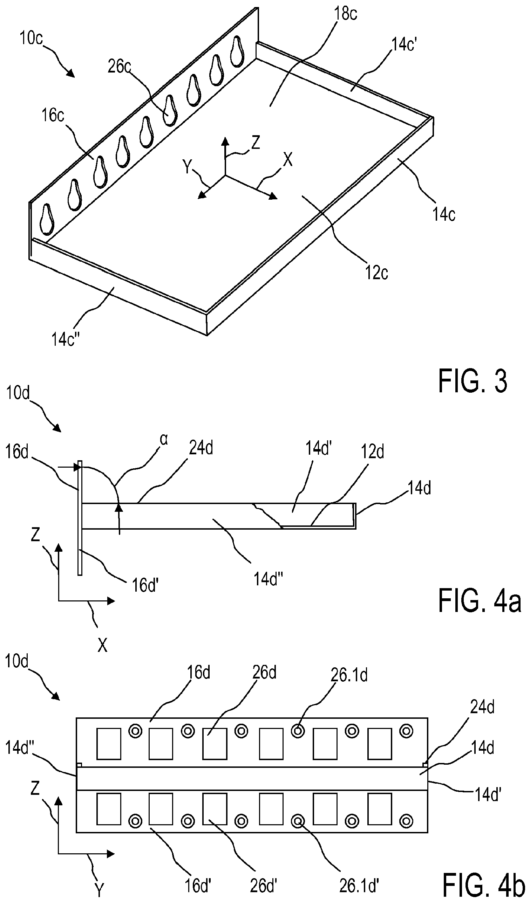

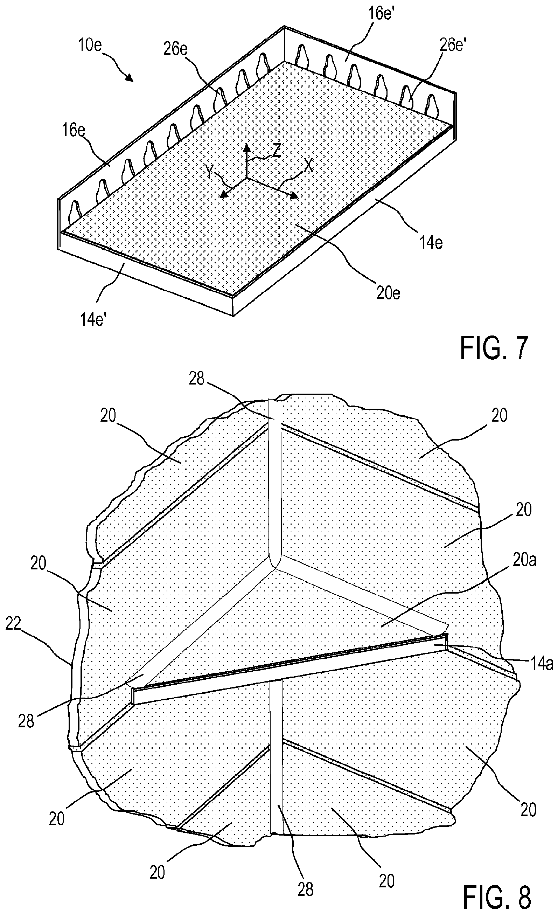

In den fünf Ausführungsbeispielen gemäß den Fig. 1 bis 5 kann sich der zumindest eine Flansch 16a; 16a'; 16b; 16b'; 16c; 16d; 16d'; 16e; 16e' oberhalb und/oder unterhalb des Grundelements 12a; 12b; 12c; 12d; 12e erstrecken. Die Fig. 1, 2, 5, 6 und 7 zeigen ein erstes, ein zweites und ein fünftes Ausführungsbeispiel einer Ablagevorrichtung 10a; 10b; 10e mit einem dreieckigen Grundelement 12a; 12b; 12e, mit zwei an den Kanten des Grundelements 12a; 12b; 12e orthogonal zueinander angeordneten Flanschen 16a; 16a'; 16b; 16b'; 16e; 16e', wobei die Flansche 16b; 16b'; 16e; 16e' der Grundelemente 12b; 12e unterschiedliche Längen aufweisen können. Wie aus den Fig. 3, 4a und 4b ersichtlich ist, weist im dritten Ausführungsbeispiel gemäß Fig. 3 die Ablagevorrichtung 10c mit einem rechteckigen Grundelement 12c nur einen an einer langen Kante des Grundelements 12c angeordneten Flansch 16c oberhalb des Grundelements 12c auf und im vierten Ausführungsbeispiel gemäß den Fig. 4a, 4b weist die Ablagevorrichtung 10d mit einem rechteckigen Grundelement 12d einen an der langen Kante des Grundelements 12d oberhalb des Grundelements 12d angeordneten ersten Flansch 16d und einen unterhalb des Grundelements 12d gegenüberliegend des ersten Flansches 16d angeordneten zweiten Flansch 16d' auf. Selbstverständlich sind auch andere, einem Fachmann als sinnvoll erscheinende Längen, Höhen und Formen des Flansches 16a; 16a'; 16b; 16b'; 16c; 16d; 16d'; 16e; 16e' denkbar, wie beispielsweise Unterbrechungen und/oder unterschiedliche Höhen des Flansches 16a; 16a'; 16b; 16b'; 16c; 16d; 16d'; 16e; 16e'.

Um Ablagerungen und eine dauerhafte Benetzung der Ablagevorrichtung 10a; 10b; 10c; 10d; 10e mit Wasser zu reduzieren und somit dem Hygieneanspruch gerecht zu werden, weist das Grundelement 12a; 12b; 12c; 12d; 12e eine Ablaufeinrichtung 24d auf. In einer ersten Ausgestaltung kann die Ablaufeinrichtung 24 als Gefälle des Grundelements 12a; 12b; 12c; 12d; 12e ausgeführt sein. Hierzu weist das Grundelement 12a; 12b; 12c; 12d; 12e mit der horizontalen Ebene XY in Richtung einer x-Achse und/oder in Richtung einer y-Achse ein Gefälle mit einem Ablaufwinkel α auf, welcher zwischen dem Flansch 16a; 16a'; 16b; 16b'; 16c; 16d; 16d'; 16e; 16e' und dem Grundelement 12a; 12b; 12c; 12d; 12e einen Ablaufwinkel α > 90° einschließen kann, insbesondere einen Ablaufwinkel α von 92°. Dadurch ist die Ablagevorrichtung 10a; 10b; 10c; 10d; 10e in einem Winkel α zu einer vertikalen Ebene XZ und/oder einer vertikalen Ebene YZ schräg abfallend und kann eine trockene und sichere Ablagefläche der Ablagevorrichtung 10a; 10b; 10c; 10d; 10e für Bad- und/oder Duschutensilien sicherstellen. In weiteren Ausgestaltungen kann die Ablaufeinrichtung 24 der Ablagevorrichtung 10a; 10b; 10c; 10d; 10e alternativ oder zusätzlich beispielsweise mit hier nicht dargestellten Aussparungen und/oder Rillen ausgeführt sein, welche vorzugsweise im Grundelement 12a; 12b; 12c; 12d; 12e vorgesehen sind.

In einer weiteren Ausgestaltung kann die Ablagevorrichtung 10a; 10b; 10c; 10d; 10e Stabilisierungseinrichtungen für Bad- und/oder Duschutensilien aufweisen, wie beispielsweise hier nicht dargestellte Mulden und/oder Noppen.

Wie aus den Fig. 1 bis 8 ersichtlich ist, erstreckt sich in allen fünf Ausführungsbeispielen der zumindest eine Randsteg 14a; 14b; 14c; 14c'; 14c"; 14d; 14d'; 14d"; 14e; 14e' oberhalb und/oder unterhalb des Grundelements 12a; 12b; 12c; 12d; 12e. Der Randsteg 14a; 14b; 14c; 14c'; 14c"; 14d; 14d'; 14d"; 14e; 14e' bildet somit einen optischen und einen geometrischen Abschluss der Ablagevorrichtung 10a; 10b; 10c; 10d; 10e und ist vorzugsweise zu einer in einem Bad oder einer Dusche befindlichen Person gerichtet. In den vorliegenden Ausführungsbeispielen bilden das Grundelement 12a; 12b; 12c; 12d; 12e, der zumindest eine Flansch 16a; 16a'; 16b; 16b'; 16c; 16d; 16d'; 16e; 16e' und der zumindest eine Randsteg 14a; 14b; 14c; 14c'; 14c"; 14d; 14d'; 14d"; 14e; 14e' der Ablagevorrichtung 10a; 10b; 10c; 10d; 10e eine wannenförmige Aufnahme 18a; 18b; 18c; 18d; 18e zum Aufnehmen eines Wandbelags 20a; 20e aus. Die Aufgabe des als flächiges Element ausgebildeten Randstegs 14a; 14b; 14c; 14c'; 14c"; 14d; 14d'; 14d"; 14e; 14e' ist insbesondere eine randseitige Begrenzung für den eingelegten Wandbelag 20a; 20e und dient gleichzeitig als Kantenschutz für in einem Bad oder einer Dusche befindliche Personen. Da die Ablagevorrichtung 10a; 10b; 10c; 10d; 10e auch ohne Wandbelag 20a; 20e mit der nach oben oder mit der nach unten gerichteten wannenförmigen Aufnahme 18a; 18b; 18c; 18d; 18e eingesetzt werden kann, kann der Randsteg 14a; 14b; 14c; 14c'; 14c"; 14d; 14d'; 14d"; 14e; 14e' als eine Rutschsicherung für die auf der Ablagevorrichtung 10a; 10b; 10c; 10d; 10e abgelegten Bad- und/oder Duschutensilien und/oder als Kantenschutz für in einem Bad oder einer Dusche befindliche Personen fungieren. Die Herstellung der wannenförmigen Ablagevorrichtung 10a; 10b; 10c; 10d; 10e kann aus einem nichtrostenden Metall aus mehreren Einzelteilen durch eine Fügetechnik, wie beispielsweise Schweißen, oder aus einer einteiligen vorgefertigten Platine durch Tiefziehen erfolgen oder aus einem Kunststoff durch Spritzgießen, wobei jedoch auch andere, einem Fachmann als sinnvoll erscheinende Werkstoffe und Verfahren zum Herstellen der Ablagevorrichtung 10a; 10b; 10c; 10d; 10e denkbar sind.

Um eine sichere Befestigung der Ablagevorrichtung 10a; 10b; 10c; 10d; 10e an einer Raumwand 22 zu gewährleisten, weist der zumindest eine Flansch 16a; 16a'; 16b; 16b'; 16c; 16d; 16d'; 16e; 16e' Ausnehmungen 26a; 26a'; 26b; 26b'; 26c; 26d; 26d'; 26e; 26e'; 26.1a; 26.1a'; 26.1b; 26.1b'; 26.1d; 26.1d' zur Befestigung an der Raumwand 22 auf. Wie aus den Fig. 1 bis 7 ersichtlich ist, können die Ausnehmungen 26a; 26a'; 26b; 26b'; 26c; 26d; 26d'; 26e; 26e'; 26.1a; 26.1a'; 26.1b; 26.1b'; 26.1d; 26.1d' unterschiedlich ausgebildet sein. Grundsätzlich sind die Ausnehmungen 26a; 26a'; 26b; 26b'; 26c; 26d; 26d'; 26e; 26e'; 26.1a; 26.1a'; 26.1b; 26.1b'; 26.1d; 26.1d' des Flansches 16a; 16a'; 16b; 16b'; 16c; 16d; 16d'; 16e; 16e' zur Aufnahme von Bindemittel und/oder Befestigungselementen vorgesehen. Als Bindemittel ist beispielsweise ein Fliesenkleber oder ein vergleichbares Material mit haftenden Eigenschaften und als Befestigungselemente sind Senkkopfschrauben aus einem nichtrostenden Material und Dübel mit selbstdichtenden Eigenschaften vorgesehen. In dem ersten, zweiten und vierten Ausführungsbeispiel gemäß den Fig. 1, 2, 4a, 4b und 6 sind die Ausnehmungen 26a; 26a'; 26b; 26b'; 26d; 26d'; 26.1a; 26.1a'; 26.1b; 26.1b'; 26.1d; 26.1d' des Flansches 16a; 16a'; 16b; 16b'; 16d; 16d' zur Aufnahme von Bindemittel und Befestigungselementen getrennt ausgeführt. Die Ausnehmungen 26a; 26a'; 26b; 26b'; 26d; 26d' des Flansches 16a; 16a'; 16b; 16b'; 16d; 16d' sind vorzugsweise zur Aufnahme von Bindemittel und die Ausnehmungen 26.1a; 26.1a'; 26.1b; 26.1b'; 26.1d; 26.1d' des Flansches 16a; 16a'; 16b; 16b'; 16d; 16d' sind vorzugsweise zur Aufnahme von hier nicht dargestellten Befestigungselementen vorgesehen. Alternativ hierzu können in dem dritten und dem fünften Ausführungsbeispiel gemäß den Fig. 3, 5 und 7 die Ausnehmungen 26c; 26e; 26e' des Flansches 16c; 16e; 16e' zur Aufnahme von Bindemittel und Befestigungselementen in einer gemeinsamen Ausnehmung 26c; 26e; 26e' des Flansches 16c; 16e; 16e' ausgeführt sein. Die Ausnehmung 26.1a; 26.1a'; 26.1b; 26.1b'; 26.1d; 26.1d' des Flansches 16a; 16a'; 16b; 16b'; 16d; 16d' bzw. der sich verjüngende Bereich der Ausnehmung 26c; 26e; 26e', welcher für die Aufnahme des Schraubenkopfes einer Senkkopfschraube dient, weist zur flächenbündigen Verschraubung mit dem Flansch 16a; 16a'; 16b; 16b'; 16c; 16d; 16d'; 16e; 16e' eine Senkung auf, wodurch ein Überstand des Schraubenkopfes vermieden werden kann. In vorteilhafter Weise kann in allen Ausführungsbespielen durch die Verschraubung die Ablagevorrichtung 10a; 10b; 10c; 10d; 10e in einer definierten Endposition an der Raumwand 22 befestigt werden.

In einer Ausführungsform kann das Grundelement 12a; 12b; 12c; 12d; 12e eine mehreckige und in einer alternativen Ausführungsform kann das Grundelement 12a; 12b; 12c; 12d; 12e eine runde Grundform aufweisen, wobei die runde Ausführung der Grundform beispielsweise oval, elliptisch, kreisrund oder eine Kombination daraus sein kann. Alle fünf Ausführungsbeispiele gemäß den Fig. 1 bis 8 zeigen eine dreieckige oder eine viereckige Grundform des Grundelements 12a; 12b; 12c; 12d; 12e auf, wobei die hier nicht dargestellten runden Grundformen des Grundelements als eine teilkreisförmige, eine halbkreisförmige oder eine viertelkreisförmige Grundform ausgeführt werden können.

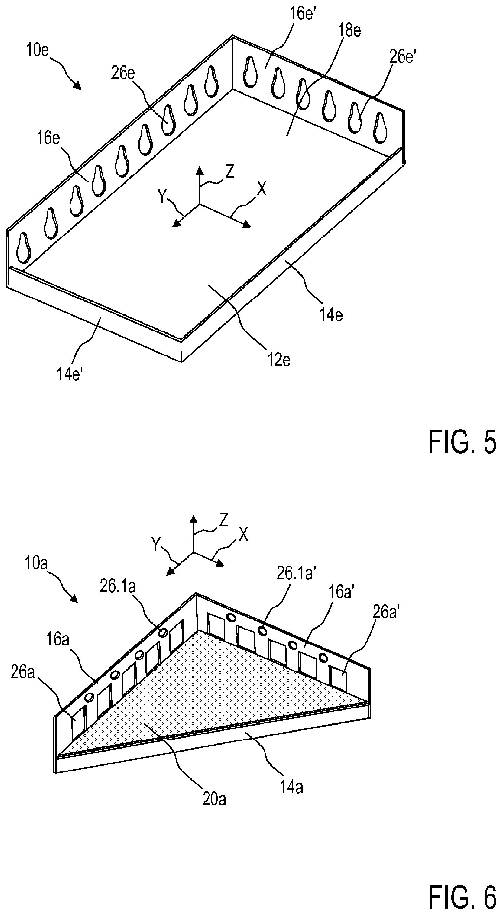

Bei den dargestellten Ausführungsbeispielen gemäß den Fig. 1 bis 8 ist ein Wandbelag 20a; 20e vorgesehen, der in der wannenförmigen Aufnahme 18a; 18b; 18c; 18d; 18e aufgenommen ist, wobei der Wandbelag 20a; 20e identisch mit dem Wandbelag 20 der Raumwand 22 oder ein artfremder Wandbelag sein kann. Wie aus den Fig. 6 , 7 und 8 ersichtlich ist, wird erfindungsgemäß bei der Montage der Ablagevorrichtung 10a; 10b; 10c; 10d; 10e in einem ersten Arbeitsschritt der Wandbelag 20a; 20e vorzugsweise mit einer Silikondichtmasse 28 in die Aufnahme 18a; 18b; 18c; 18d; 18e eingeklebt, wie beispielsweise einem Neutralsilikon bzw. einem nichtätzenden Silikonmaterial. Vorzugsweise wird Neutralsilikon verwendet, damit die aus einem nichtrostenden Material hergestellte Oberfläche der Ablagevorrichtung 10a; 10b; 10c; 10d; 10e nicht beschädigt werden kann. Teilbereiche der Raumwand 22 können bereits mit dem Wandbelag 20 eingefliest werden, um dann die Ablagevorrichtung 10a; 10b; 10c; 10d; 10e an einer gewünschten Stelle der Raumwand 22 an einer Unterkante des Wandbelags 20 anzupassen. In einem zweiten Arbeitsschritt kann die Ablagevorrichtung 10a; 10b; 10c; 10d; 10e an der Raumwand 22 mit Bindemittel und/oder Befestigungselementen befestigt und anschließend eingefliest werden, bevor restliche Flächen der Raumwände 22 mit dem Wandbelag 20 vollständig eingefliest werden. In einem dritten Arbeitsschritt wird zwischen dem Wandbelag 20a; 20e der Ablagevorrichtung 10a; 10b; 10c; 10d; 10e und dem Wandbelag 20 einer Raumwand 22 eine mit dem Werkstoff der Ablagevorrichtung 10a; 10b; 10c; 10d; 10e verträgliche Silikondichtmasse 28 aufgebracht.

### Bezugszeichenliste

10a; 10b; 10c; 10d; 10e Ablagevorrichtung
12a; 12b; 12c; 12d; 12e Grundelement
14a; 14b; 14c; 14d; 14e; 14c'; 14c"; 14d'; 14d"; 14e' Randsteg
16a; 16b; 16c; 16d; 16e; 16a'; 16b'; 16d'; 16e' Flansch
18a; 18b; 18c; 18d; 18e Aufnahme
20; 20a; 20e Wandbelag
22 Raumwand
24d Ablaufeinrichtung
26a; 26b; 26c; 26d; 26e; 26a'; 26b'; 26d'; 26e' Ausnehmung (Bindemittel)
26.1a; 26.1b; 26.1d; 26.1a'; 26.1b'; 26.1d' Ausnehmung (Befestigungselement)
28 Silikondichtmasse

α Ablaufwinkel
XY horizontale Ebene

## Patentansprüche

1. Anordnung zur Befestigung einer Ablagevorrichtung (10a; 10b; 10c; 10d; 10e) für Bad- und/oder Duschutensilien an einer mit einem Wandbelag (20) versehenen Raumwand (22), mit der Ablagevorrichtung (10a; 10b; 10c; 10d; 10e) und mit dem Wandbelag (20) der Raumwand (22), wobei die Ablagevorrichtung (10a; 10b; 10c; 10d; 10e) ein sich im Wesentlichen in einer horizontalen Ebene (XY) erstreckendes Grundelement (12a; 12b; 12c; 12d; 12e) und zumindest einen abgewinkelten Randsteg (14a; 14b; 14c; 14c'; 14c"; 14d; 14d'; 14d"; 14e; 14e') aufweist, **gekennzeichnet durch** einen Wandbelag (20a; 20e) der Ablagevorrichtung (10a; 10b: 10c; 10d; 10e), wobei die Ablagevorrichtung (10a; 10b; 10c; 10d; 10e) zu einer sicheren und optisch ansprechenden Montage der Ablagevorrichtung (10a; 10b; 10c; 10d; 10e) zumindest einen sich in einer vertikalen Ebene (XZ, YZ) erstreckenden Flansch (16a; 16a'; 16b; 16b'; 16c; 16d; 16d'; 16e; 16e') aufweist, der unter dem Wandbelag (20) der Raumwand (22) angeordnet ist, wobei das Grundelement (12a; 12b; 12c; 12d; 12e), der zumindest eine Flansch (16a; 16a'; 16b; 16b'; 16c; 16d; 16d'; 16e; 16e') und der zumindest eine Randsteg (14a; 14b; 14c; 14c'; 14c"; 14d; 14d'; 14d"; 14e; 14e') der Ablagevorrichtung (10a; 10b; 10c; 10d; 10e) eine wannenförmige Aufnahme (18a; 18b; 18c; 18d; 18e) zum Aufnehmen eines Wandbelags (20a; 20e) ausbilden, wobei der zumindest eine Flansch (16a; 16a'; 16b; 16b'; 16c; 16d; 16d': 16e; 16e') an einer Kante des Grundelements (12a; 12b; 12c; 12d; 12e) angeordnet ist und wobei der Randsteg (14a; 14b; 14c; 14c'; 14c"; 14d; 14d'; 14d"; 14e; 14e') an einer weiteren Kante des Grundelements (12a; 12b; 12c; 12d; 12e) angeordnet ist, wobei der Wandbelag (20a; 20e) der Ablagevorrichtung (10a; 10b; 10c; 10d; 10e) in der wannenförmigen Aufnahme (18a; 18b; 18c; 18d; 18e) aufgenommen ist, wobei der Wandbelag (20a; 20e) der AblageVorrichtung (10a; 10b; 10c; 10d; 10e) in die wannenförmige Aufnahme (18a; 18b; 18c; 18d; 18e) eingeklebt ist.

2. Anordnung nach Anspruch 1, **dadurch gekennzeichnet, dass** sich der zumindest eine Flansch (16a; 16a'; 16b; 16b'; 16c; 16d; 16d'; 16e; 16e') oberhalb und/oder unterhalb des Grundelements (12a; 12b; 12c; 12d; 12e) erstreckt.

3. Anordnung nach Anspruch 1 und 2, **dadurch gekennzeichnet, dass** das Grundelement (12a; 12b; 12c; 12d; 12e) eine Ablaufeinrichtung (24d) aufweist.

4. Anordnung nach einem der Ansprüche 1 bis 3, **dadurch gekennzeichnet, dass** sich der zumindest eine Randsteg (14a; 14b; 14c; 14c'; 14c"; 14d; 14d'; 14d"; 14e; 14e') oberhalb und/oder unterhalb des Grundelements (12a; 12b; 12c; 12d; 12e) erstreckt.

5. Anordnung nach einem der Ansprüche 1 bis 4, **dadurch gekennzeichnet, dass** der zumindest eine Flansch (16a; 16a'; 16b; 16b'; 16c; 16d; 16d'; 16e; 16e') Ausnehmungen (26a; 26a'; 26b; 26b'; 26c; 26d; 26d'; 26e; 26e'; 26.1a; 26.1a'; 26.1b; 26.1b'; 26.1d; 26.1d') zur Befestigung an der Raumwand (22) aufweist.

6. Anordnung nach einem der Ansprüche 1 bis 5, **dadurch gekennzeichnet, dass** die Ausnehmungen (26a; 26a'; 26b; 26b'; 26c; 26d; 26d'; 26e; 26e'; 26.1a; 26.1a'; 26.1b; 26.1b'; 26.1d; 26.1d') des Flansches (16a; 16a'; 16b; 16b'; 16c; 16d; 16d'; 16e; 16e') zur Aufnahme von Bindemittel und/oder Befestigungselementen vorgesehen sind.

7. Anordnung nach einem der Ansprüche 1 bis 6, **dadurch gekennzeichnet, dass** das Grundelement (12a; 12b; 12c; 12d; 12e) eine mehreckige oder eine runde Grundform aufweist.

8. Anordnung nach einem der Ansprüche 1 bis 7, **dadurch gekennzeichnet, dass** das Grundelement (12a; 12b; 12c; 12d; 12e) aus einem nichtrostenden Metall oder aus einem Kunststoff oder aus einem Verbundwerkstoff ausgebildet ist.

9. Anordnung nach einem der Ansprüche 1 bis 8, **dadurch gekennzeichnet, dass** zwischen dem Wandbelag (20a; 20e) der Ablagevorrichtung (10a; 10b; 10c; 10d; 10e) und dem Wandbelag (20) der Raumwand (22) eine mit dem Werkstoff der Ablagevorrichtung (10a; 10b; 10c; 10d; 10e) verträgliche Silikondichtmasse (28) aufgebracht wird.

10. Ablagevorrichtung (10a; 10b; 10c; 10d; 10e) für eine Anordnung nach einem der Ansprüche 1 bis 9, wobei die Ablagevorrichtung (10a; 10b; 10c; 10d; 10e) ein sich im Wesentlichen in einer horizontalen Ebene (XY) erstreckendes Grundelement (12a; 12b; 12c; 12d; 12e), zumindest einen abgewinkelten Randsteg (14a; 14b; 14c; 14c'; 14c"; 14d; 14d'; 14d"; 14e; 14e') und zumindest einen sich in einer vertikalen Ebene (XZ, YZ) erstreckenden Flansch (16a; 16a'; 16b; 16b'; 16c; 16d; 16d'; 16e; 16e') aufweist, der unter einem Wandbelag (20) einer Raumwand (22) anordenbar ist, **gekennzeichnet durch** einen Wandbelag (20a; 20e), der in einer wannenförmigen Aufnahme (18a; 18b; 18c; 18d; 18e) aufgenommen ist, wobei das Grundelement (12a; 12b; 12c; 12d; 12e), der zumindest eine Flansch (16a; 16a'; 16b; 16b'; 16c; 16d; 16d'; 16e; 16e') und der zumindest eine Randsteg (14a; 14b; 14c; 14c'; 14c"; 14d; 14d'; 14d"; 14e; 14e') die wannenförmige Aufnahme (18a; 18b; 18c; 18d; 18e) zum Aufnehmen des Wandbelags (20a; 20e) ausbilden, wobei der Wandbelag (20a; 20e) in die wannenförmige Aufnahme (18a; 18b; 18c; 18d; 18e) eingeklebt ist, wobei der zumindest eine Flansch (16a; 16a'; 16b; 16b'; 16c; 16d; 16d'; 16e; 16e') an einer Kante des Grundelements (12a; 12b; 12c; 12d; 12e) angeordnet ist und wobei der Randsteg (14a; 14b; 14c; 14c'; 14c"; 14d; 14d'; 14d"; 14e; 14e') an einer weiteren Kante des Grundelements (12a; 12b; 12c; 12d; 12e) angeordnet ist.

## Claims

1. Arrangement for fastening a shelf device (10a; 10b; 10c; 10d; 10e) for bathroom and/or shower implements to a room wall (22) that is provided with a wall coating (20), with the shelf device (10a; 10b; 10c; 10d; 10e) and with the wall coating (20) of the room wall (22), wherein the shelf device (10a; 10b; 10c; 10d; 10e) comprises a basis element (12a; 12b; 12c; 12d; 12e) extending substantially in a horizontal plane (XY) and at least one angled peripheral web (14a; 14b; 14c; 14c'; 14c"; 14d; 14d'; 14d"; 14e; 14e'), **characterised by** a wall coating (20a; 20e) of the shelf device (10a; 10b; 10c; 10d; 10e), wherein for a secure and optically pleasant mounting of the shelf device (10a; 10b; 10c; 10d; 10e), the shelf device (10a; 10b; 10c; 10d; 10e) comprises at least one flange (16a; 16a'; 16b; 16b'; 16c; 16d; 16d'; 16e; 16e') extending in a vertical plane (XZ, YZ) and arranged underneath the wall coating (20) of the room wall (22), the basis element (12a; 12b; 12c; 12d; 12e), the at least one flange (16a; 16a'; 16b; 16b'; 16c; 16d; 16d'; 16e; 16e') and the at least one peripheral web (14a; 14b; 14c; 14c'; 14c"; 14d; 14d'; 14d"; 14e; 14e') of the shelf device (10a; 10b; 10c; 10d; 10e) forming a tub-shaped receptacle (18a; 18b; 18c; 18d; 18e) for receiving a wall coating (20a; 20e), wherein the at least one flange (16a; 16a'; 16b; 16b'; 16c; 16d; 16d'; 16e; 16e') is arranged on an edge of the basis element (12a; 12b; 12c; 12d; 12e) and wherein the peripheral web (14a; 14b; 14c; 14c'; 14c"; 14d; 14d'; 14d"; 14e; 14e') is arranged on a further edge of the basis element (12a; 12b; 12c; 12d; 12e), wherein the wall coating (20a; 20e) of the shelf device (10a; 10b; 10c; 10d; 10e) is received in the tub-shaped receptacle (18a; 18b; 18c; 18d; 18e), wherein the wall coating (20a; 20e) of the shelf device (10a; 10b; 10c; 10d; 10e) is glued into the tub-shaped receptacle (18a; 18b; 18c; 18d; 18e).

2. Arrangement according to claim 1, **characterised in that** the at least one flange (16a; 16a'; 16b; 16b'; 16c; 16d; 16d'; 16e; 16e') extends above and/or below the basis element (12a; 12b; 12c; 12d; 12e).

3. Arrangement according to claims 1 and 2, **characterised in that** the basis element (12a; 12b; 12c; 12d; 12e) comprises a run-off device (24d).

4. Arrangement according to one of claims 1 to 3, **characterised in that** the at least one peripheral web (14a; 14b; 14c; 14c'; 14c"; 14d; 14d'; 14d"; 14e; 14e') extends above and/or below the basis element (12a; 12b; 12c; 12d; 12e).

5. Arrangement according to one of claims 1 to 4, **characterised in that** the at least one flange (16a; 16a'; 16b; 16b'; 16c; 16d; 16d'; 16e; 16e') comprises recesses (26a; 26a'; 26b; 26b'; 26c; 26d; 26d'; 26e; 26e'; 26.1a; 26.1a'; 26.1b; 26.1b'; 26.1d; 26.1d') for fastening to the room wall (22).

6. Arrangement according to one of claims 1 to 5, **characterised in that** the recesses (26a; 26a'; 26b; 26b'; 26c; 26d; 26d'; 26e; 26e'; 26.1a; 26.1a'; 26.1b; 26.1b'; 26.1d; 26.1d') of the flange (16a; 16a'; 16b; 16b'; 16c; 16d; 16d'; 16e; 16e') are configured to receive an adhesive-bonding agent and/or fastening elements.

7. Arrangement according to one of claims 1 to 6, **characterised in that** the basis element (12a; 12b; 12c; 12d; 12e) has a polygonal or a rotund basic shape.

8. Arrangement according to one of claims 1 to 7, **characterised in that** the basis element (12a; 12b; 12c; 12d; 12e) is implemented of a rust-proof metal or of a synthetic material or of a composite material.

9. Arrangement according to one of claims 1 to 8, **characterised in that** a silicone sealing mass (28) that compatible with the material of the shelf device (10a; 10b; 10c; 10d; 10e) is applied between the wall coating (20a; 20e) of the shelf device (10a; 10b; 10c; 10d; 10e) and the wall coating (20) of the room wall (22).

10. Shelf device (10a; 10b; 10c; 10d; 10e) for an arrangement according to one of claims 1 to 9, wherein the shelf device (10a; 10b; 10c; 10d; 10e) comprises a basis element (12a; 12b; 12c; 12d; 12e) extending substantially in a horizontal plane (XY), at least one angled peripheral web (14a; 14b; 14c; 14c'; 14c"; 14d; 14d'; 14d"; 14e; 14e') and at least one flange (16a; 16a'; 16b; 16b'; 16c; 16d; 16d'; 16e; 16e') extending in a vertical plane (XZ, YZ) and arrangeable underneath a wall coating (20) of a room wall (22), **characterised by** a wall coating 20a; 20e) received in a tub-shaped receptacle (18a; 18b; 18c; 18d; 18e), wherein the basis element (12a; 12b; 12c; 12d; 12e), the at least one flange (16a; 16a'; 16b; 16b'; 16c; 16d; 16d'; 16e; 16e') and the at least one peripheral web (14a; 14b; 14c; 14c'; 14c"; 14d; 14d'; 14d"; 14e; 14e') form the tub-shaped receptacle (18a; 18b; 18c; 18d; 18e) for receiving the wall coating (20a; 20e), wherein the wall coating (20a; 20e) is glued into the tub-shaped receptacle (18a; 18b; 18c; 18d; 18e), wherein the at least one flange (16a; 16a'; 16b; 16b'; 16c; 16d; 16d'; 16e; 16e') is arranged on an edge of the basis element (12a; 12b; 12c; 12d; 12e) and wherein the peripheral web (14a; 14b; 14c; 14c'; 14c"; 14d; 14d'; 14d"; 14e; 14e') is arranged on a further edge of the basis element (12a; 12b; 12c; 12d; 12e).

## Revendications

1. Agencement pour la fixation d'un dispositif de rangement (10a ; 10b, 10c ; 10d ; 10e) pour des ustensiles de baigne et/ou douche à une paroi de chambre (22) pourvue d'un revêtement mural (20), avec le dispositif de rangement (10a ; 10b, 10c ; 10d ; 10e) et avec le revêtement mural (20) de la paroi de chambre (22), le dispositif de rangement (10a ; 10b, 10c ; 10d ; 10e) comprenant un élément de base (12a ; 12b ; 12c ; 12d ; 12e) s'étendant sensiblement dans un plan horizontal (XY) et au moins une traverse marginale anglée (14a ; 14b ; 14c ; 14c' ; 14c" ; 14d ; 14d' ; 14d" ; 14e ; 14e'), **caractérisé par** un revêtement mural (20a ; 20e) du dispositif de rangement (10a ; 10b ; 10c ; 10d ; 10e), où pour un montage fiable et optiquement agréable du dispositif de rangement (10a ; 10b, 10c ; 10d ; 10e), le dispositif de rangement (10a ; 10b, 10c ; 10d ; 10e) comporte au moins une bride (16a ; 16a' ; 16b ; 16b' ; 16c ; 16d ; 16d' ; 16e ; 16e') s'étendant dans un plan vertical (XZ, YZ) et disposée au-dessous du revêtement mural (20) de la paroi de chambre (22), l'élément de base (12a ; 12b ; 12c ; 12d ; 12e), l'au moins une bride (16a ; 16a' ; 16b ; 16b' ; 16c ; 16d ; 16d' ; 16e ; 16e') et l'au moins une traverse marginale (14a ; 14b ; 14c ; 14c' ; 14c" ; 14d ; 14d' ; 14d" ; 14e ; 14e') du dispositif de rangement (10a ; 10b, 10c ; 10d ; 10e) formant un recevoir en forme de cuve (18a ; 18b ; 18c ; 18d ; 18e) pour recevoir un revêtement mural (20a ; 20e), l'au moins une bride (16a ; 16a' ; 16b ; 16b' ; 16c ; 16d ; 16d' ; 16e ; 16e') étant disposée sur un bord de l'élément de base (12a ; 12b ; 12c ; 12d ; 12e) et la traverse marginale (14a ; 14b ; 14c ; 14c' ; 14c" ; 14d ; 14d' ; 14d" ; 14e ; 14e') étant disposée sur un autre bord de l'élément de base (12a ; 12b ; 12c ; 12d ; 12e), où le revêtement mural (20a ; 20e) du dispositif de rangement (10a ; 10b ; 10c ; 10d ; 10e) est reçu dans le recevoir en forme de cuve (18a ; 18b ; 18c ; 18d ; 18e), le revêtement mural (20a ; 20e) du dispositif de rangement (10a ; 10b ; 10c ; 10d ; 10e) étant collé dans le recevoir en forme de cuve (18a ; 18b ; 18c ; 18d ; 18e).

2. Agencement selon la revendication 1, **caractérisé en ce que** l'au moins une bride (16a ; 16a' ; 16b ; 16b' ; 16c ; 16d ; 16d' ; 16e ; 16e') s'étend au-dessus et/ou au-dessous de l'élément de base (12a ; 12b ; 12c ; 12d ; 12e).

3. Agencement selon les revendications 1 et 2, **caractérisé en ce que** l'élément de base (12a ; 12b ; 12c ; 12d ; 12e) comporte un dispositif d'écoulement (24d).

4. Agencement selon l'une quelconque des revendications 1 à 3, **caractérisé en ce que** l'au moins une traverse marginale (14a ; 14b ; 14c ; 14c' ; 14c" ; 14d ; 14d' ; 14d" ; 14e ; 14e') s'étend au-dessus et/ou au-dessous de l'élément de base (12a ; 12b ; 12c ; 12d ; 12e).

5. Agencement selon l'une quelconque des revendications 1 à 4, **caractérisé en ce que** l'au moins une bride (16a ; 16a' ; 16b ; 16b' ; 16c ; 16d ; 16d' ; 16e ; 16e') comporte des échancrures (26a ; 26a' ; 26b ; 26b' ; 26c ; 26d ; 26d' ; 26e ; 26e' ; 26.1a ; 26.1a' ; 26.1b ; 26.1b' ; 26.1d ; 26.1d') pour une fixation à la paroi de chambre (22).

6. Agencement selon l'une quelconque des revendications 1 à 5, **caractérisé en ce que** les échancrures (26a ; 26a' ; 26b ; 26b' ; 26c ; 26d ; 26d' ; 26e ; 26e' ; 26.1a ; 26.1a' ; 26.1b ; 26.1b' ; 26.1d ; 26.1d') de la bride (16a ; 16a' ; 16b ; 16b' ; 16c ; 16d ; 16d' ; 16e ; 16e') sont prévues pour recevoir un agent liant et/ou des éléments à fixation.

7. Agencement selon l'une quelconque des revendications 1 à 6, **caractérisé en ce que** l'élément de base (12a ; 12b ; 12c ; 12d ; 12e) a une forme basique polygonale ou rotonde.

8. Agencement selon l'une quelconque des revendications 1 à 7, **caractérisé en ce que** l'élément de base (12a ; 12b ; 12c ; 12d ; 12e) est réalisé d'un métal inoxydable ou d'un matériau synthétique ou d'un matériau composite.

9. Agencement selon l'une quelconque des revendications 1 à 8, **caractérisé en ce qu'**une masse d'étanchéité de silicone (28) compatible avec le matériau du dispositif de rangement (10a ; 10b ; 10c ; 10d ; 10e) est appliquée entre le revêtement mural (20a ; 20e) du dispositif de rangement (10a ; 10b ; 10c ; 10d ; 10e) et le revêtement mural (20) de la paroi de chambre (22).

10. Dispositif de rangement (10a ; 10b ; 10c ; 10d ; 10e) pour un agencement selon l'une quelconque des revendications 1 à 9, le dispositif de rangement (10a ; 10b ; 10c ; 10d ; 10e) comprenant un élément de base (12a ; 12b ; 12c ; 12d ; 12e) s'étendant sensiblement dans un plan horizontal (XY), au moins une traverse marginale anglée (14a ; 14b ; 14c ; 14c' ; 14c" ; 14d ; 14d' ; 14d" ; 14e ; 14e') et au moins une bride (16a ; 16a' ; 16b ; 16b' ; 16c ; 16d ; 16d' ; 16e ; 16e') s'étendant dans un plan vertical (XZ, YZ) et disposable au-dessous d'un revêtement mural (20) d'une paroi de chambre (22), **caractérisé par** un revêtement mural (20a ; 20e) reçu dans un recevoir en forme de cuve (18a ; 18b ; 18c ; 18d ; 18e), l'élément de base (12a ; 12b ; 12c ; 12d ; 12e), l'au moins une bride (16a ; 16a' ; 16b ; 16b' ; 16c ; 16d ; 16d' ; 16e ; 16e') et l'au moins une traverse marginale (14a ; 14b ; 14c ; 14c' ; 14c" ; 14d ; 14d' ; 14d" ; 14e ; 14e') formant le recevoir en forme de cuve (18a ; 18b ; 18c ; 18d ; 18e) pour recevoir le revêtement mural (20a ; 20e), le revêtement mural (20a ; 20e) étant collé dans le recevoir en forme de cuve (18a ; 18b ; 18c ; 18d ; 18e), l'au moins une bride (16a ; 16a' ; 16b ; 16b' ; 16c ; 16d ; 16d' ; 16e ; 16e') étant disposée sur un bord de l'élément de base (12a ; 12b ; 12c ; 12d ; 12e) et la traverse marginale (14a ; 14b ; 14c ; 14c' ; 14c" ; 14d ; 14d' ; 14d" ; 14e ; 14e') étant disposée sur un autre bord de l'élément de base (12a ; 12b ; 12c ; 12d ; 12e).
